# EUROPÄISCHE PATENTSCHRIFT

(11) **EP 1 112 452 B1**
(45) Veröffentlichungstag und Bekanntmachung des Hinweises auf die Patenterteilung: **21.05.2003**
(21) Anmeldenummer: 99968698.3
(22) Anmeldetag: 02.09.1999
(51) Int. Cl.: F16F 1/00

(54) **SCHWINGUNGSDÄMPFER AUF BASIS ELEKTRORHEOLOGISCHER/MAGNETORHEOLOGISCHER FLÜSSIGKEITEN FÜR RIEMENSPANNSYSTEME**
VIBRATION DAMPER ON THE BASIS OF ELECTRORHEOLOGICAL/MAGNETORHEOLOGICAL FLUIDS FOR BELT TENSIONING SYSTEMS
AMORTISSEUR DE VIBRATIONS A BASE DE LIQUIDES ELECTRORHEOLOGIQUES/MAGNETORHEOLOGIQUES POUR SYSTEMES DE TENSION DE COURROIES

(30) Priorität: 02.09.1998 DE 19839888
(43) Veröffentlichungstag der Anmeldung: 04.07.2001
(73) Patentinhaber: CARL SCHENCK AG, 64293 Darmstadt (DE); BAYER AG, 51368 Leverkusen (DE); Muhr und Bender, 57567 Daaden (DE)
(72) Erfinder: ROSENFELDT, Horst, D-64846 Gross-Zimmern (DE); WENDT, Eckhardt, D-51373 Leverkusen (DE); HESS, Werner, D-57567 Daaden (DE)
(74) Vertreter: Behrens, Helmut, Dipl.-Ing.
(86) Internationale Anmeldenummer: EP9906455
(87) Internationale Veröffentlichungsnummer: WO00014427

(56) Entgegenhaltungen:
- EP-A- 0 392 274
- EP-A- 0 534 327
- DE-A- 4 134 354
- DE-A- 19 717 691
- DE-U- 29 518 045
- GB-A- 2 275 661
- US-A- 5 752 891

## Beschreibung

Die Erfindung betrifft einen Schwingungsdämpfer auf Basis elektrorheologischer/magnetorheologischer Flüssigkeiten für Riemenspannsysteme gemäß Oberbegriff des Patentanspruch 1.

In Kraftfahrzeugen werden die Nebenaggregate des Motors über einen Riemenantrieb angetrieben. Die Antriebskraft hierzu liefert die Kurbelwelle. Zu den über Riemen und Riemenscheibe angetriebenen Nebenaggregaten gehören der Generator, die Wasserpumpe, der Kompressor der Klimaanlage sowie die Hydraulikpumpe der Lenkhilfe.

Voraussetzung für eine hohe Lebensdauer der Antriebsriemen ist die ständige Aufrechterhaltung der richtigen Vorspannung. Bekannt sind sogenannte Riemenspannsysteme, die eine Vorspannung des Antriebsriemens sicherstellen. Die Spannung des Riemens muß dabei so eingestellt werden, daß sie einerseits nicht zu stark ist, da dies die Lebensdauer der Antriebsriemen beschränkt und zu einer Beschädigung der Lager der angeschlossenen Nebenaggregate führen kann und andererseits nicht zu schwach ist, da dies im Extremfall zu einem Durchrutschen des Riemens oder zu einem Quietschen des Riemens führt.

Die oben genannten bekannten Riemenspannsysteme werden von der Mobea KG, Postfach 1 07, D-67564 Daaden seit einigen Jahren als Serienteile gefertigt und werden in unterschiedlichen Kfz-Typen eingebaut. Diese Riemenspannsysteme besitzen zusätzlich eine Dämpfung, die aufgrund großer Ungleichförmigkeiten an der Kurbelwelle erforderlich sind. Es werden Riemenspannsysteme mit Reibungsdämpfung oder Riemenspannsysteme mit Reibungsdämpfung und zusätzlicher Hydraulikdämpfung eingesetzt. Solche Riemenspannsysteme bestehen aus einem am Motorblock angeordneten stationären Teil, mit einem kegelförmig ausgebildeten Aufnahmeteil sowie einer auf dem kegelförmigen Aufnahmeteil drehbar gelagerten Spannrollenwippe mit daran angeordneter Spannrolle. Das kegelförmige Aufnahmeteil ist mit einem Reibbelag versehen. Die Spannrolle mit Spannrollenwippe liegt über eine mit dem stationären Teil in Verbindung stehenden Torsionsfeder vorgespannt an dem Antriebsriemen an. Bei wechselnder Riemenvorspannung dreht sich die Spannrollenwippe in der mit Reibbelag versehenen kegelförmigen Lagerung. Bei diesem Riemenspannsystem mit Reibungsdämpfung ist nur eine konstante Dämpfung in einem Kurbelwellen Drehzahlbereich bis ca. 2000 U/min einstellbar.

Bei den Riemenspannsystemen mit Reibungsdämpfung und zusätzlicher Hydraulikdämpfung ist an dem stationären Teil ein hydraulischer Längszylinder angeordnet, dessen aus dem Zylindergehäuse herausgeführte Kolbenstange mit der drehbeweglich gelagerten Spannrollenwippe verbunden ist. Bei einer Längsbeweging der Kolbenstange bewegt sich der mit der Kolbenstange verbundene, den Zylinder in zwei Arbeitskammern unterteilende Verdrängerkolben mit, wobei die Flüssigkeit durch Bohrungen in dem Verdrängerkolben von einer Arbeitskammer in die andere Arbeitskammer verdrängt wird. Diese Ausführung benötigt einen sehr großen Bauraum. Das Dämpfungsverhalten ist hierbei nicht veränderbar.

Aufgabe der vorliegenden Erfindung ist es, einen Schwingungsdämpfer für Riemenspannsysteme zu schaffen, der eine variable Dämpfung über den gesamten Kurbelwellendrehzahlbereich ermöglicht und einen geringen Bauraumbedarf aufweist.

Diese Aufgabe wird durch die im kennzeichnenden Teil des Patentanspruch 1 angegebenen Merkmale gelöst.

Elektrorheologische und magnetorheologische Flüssigkeiten verändern unter dem Einfluß elektrischer bzw. magnetischer Gleich- und Wechselfelder ihre Viskosität. Sie können dabei innerhalb weniger Millisekunden den Aggregatszustand zwischen flüssig und fest ändern. Dadurch sind Steuerungsvorgänge mit extrem hoher Dynamik möglich. Ihre rheologischen Eigenschaften können diese Flüssigkeiten stufenlos verändern. Durch Veränderung der Viskosität der Flüssigkeit läßt sich die Dämpfungskraft in Abhängigkeit von einer auftretenden Riemenschwingung einstellen. Elektrorheologische Flüssigkeiten bzw. magnetorheologische Flüssigkeiten bestehen aus in einem Trägermedium suspendierte Festpartikel, welche über elektrische und/oder magnetische Felder polarisierbar sind. Bekannt ist der Einsatz bei Hydraulikventilen, für Hydraulikzylindern, Vibratoren, Viskositätskupplungen, Stoßdämpfern oder Motorlagern (Übersichtsartikel "Applications of the electrorheological Effect in Engineering practice", Fluid MechanicsSoviet Research, Vol. 8, No. 4, July-August 1919).

Durch die erfindungsgemäße Ausbildung ist in Abhängigkeit von einem Hochspannungssignal die Viskosität der sich zwischen den Kondensatorflächen befindlichen elektrorheologischen Flüssigkeit im Ringspalt 22 veränderbar, so daß durch entsprechende Viskositätssteuerung eine auftretende gemessene Riemenschwingung gedämpft werden kann.

Der erfindungsgemäße Schwingungsdämpfer kann ohne großen Aufwand auch nachträglich an bereits bestehende Riemenspann-Systeme angebracht werden.

Weitere vorteilhafte Merkmale sowie die Funktion der Erfindung ergeben sich aus der nachstehenden Beschreibung von Ausführungsbeispielen anhand der Zeichnungen.

Es zeigt:
- Fig.1.:: Ein Riemenspannsystem mit angeflanschtem erfindungsgemäßen Schwingungsdämpfer in Schnittdarstellung,
- Fig.2.:: das Riemenspannsystem mit Schwingungsdämpfer in Draufsicht,
- Fig.3.:: eine detaillierte Darstellung des Schwingungsdämpfers in Längsschnitt,
- Fig.4.:: den Schwingungsdämpfer gemäß Fig. 3 im Querschnitt.

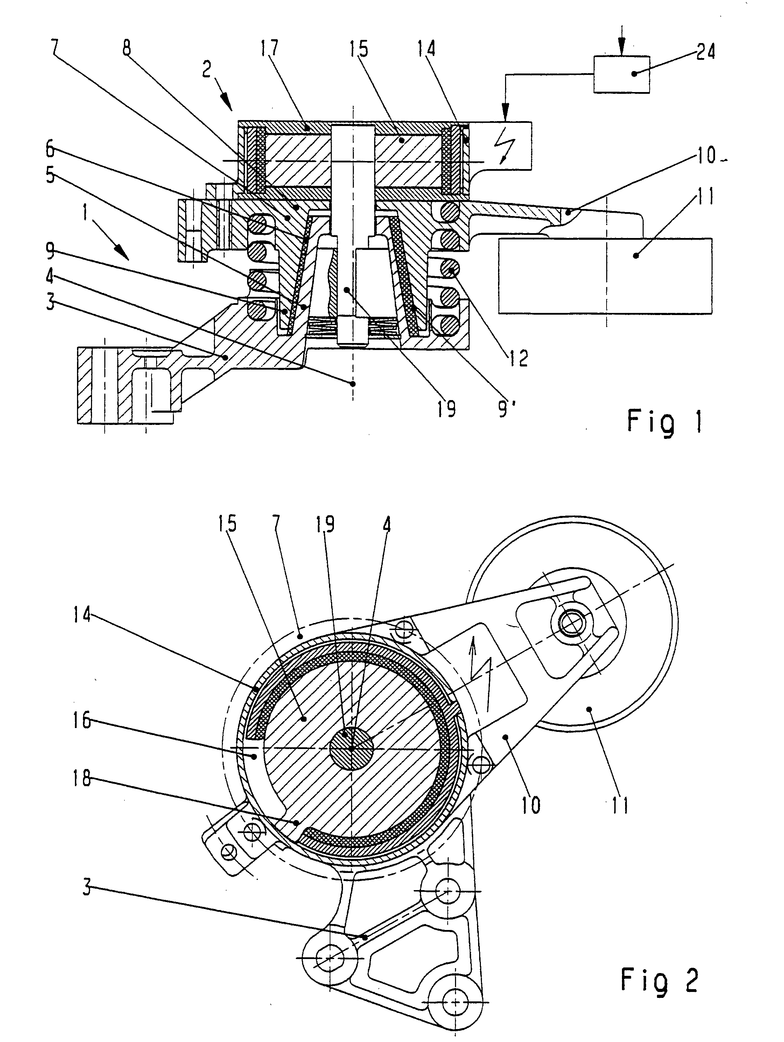

In der Fig. 1 ist ein Riemenspannsystem mit Reibungsdämpfung 1 mit angeflanschtem erfindungsgemäßen Schwingungsdämpfer 2 in Schnittdarstellung gezeigt. Das Riemenspannsystem 1 besteht aus einem stationären Teil 3 mit einem eine Längsachse 4 aufweisenden kegelförmigen Aufnahmeteil 5. Das kegelförmige Aufnahmeteil 5 ist mit einem Reibbelag 6 versehen. Eine Spannrollenwippe 7 ist drehbar um die Längsachse 4 auf dem stationären Teil angeordnet und besteht im wesentlichen aus einem scheibenförmigen Grundelement 8 und einer mittig angeordneten zylindrischen Hülse 9, die eine an das kegelförmige Aufnahmeteil 5 angepaßte kegelförmige Bohrung 9' aufweist.

In einer weiteren Ausgestaltung der Erfindung könnte das Kegelförmige Aufnahmeteil 5 auch ohne Reibbelag 6 versehen sein.

Die Spannrollenwippe 7 weist außerdem an dem scheibenförmigen Element 8 einen radial sich nach außen erstreckenden, konisch sich verjüngenden Haltearm 10 auf, der die Spannrolle 11, die an dem nicht dargestellten Antriebsriemen anliegt, lagert. Die Spannrollenwippe 7 ist über eine Torsionsfeder 12 an dem stationären Teil 3 abgestützt, so daß die Spannrolle 11 gegen die Federkraft vorgespannt an dem Antriebsriemen anliegt. Die Längsachse bzw. Drehachse der Torsionsfeder 12 entspricht der Längsachse 4 des kegelförmigen Aufnahmeteils 5.

Auf der der zylindrischen Hülse 9 abgewandten Seite des scheibenförmigen Grundelementes 8 ist der Schwingungsdämpfer 2, der als Torsionsschwingungsdämpfer ausgebildet ist, angeordnet. Der Schwingungsdämpfer 2 besteht aus einem hohlzylindrischen Gehäuse 14, das an das scheibenförmige Grundelement 8 angeschraubt ist. Mittig in dem Gehäuse 14 ist ein zylindrisches Element 15 angeordnet, so daß eine Kammer 16 zwischen zylindrischem Element 15 und Gehäuseinnenwand 14' gebildet wird. Die Kammer 16 wird weiterhin durch das scheibenförmige Grundelement 8 und einem auf dem Gehäuse 14 angeordneten Deckelteil 17 begrenzt. An dem zylindrischen Element 15 ist ein in die Kammer ragender, sich bis zur Gehäuseinnenwand 14' erstreckender Drehkolbenflügel 18 angeordnet.

Das zylindrische Element 15 weist weiterhin eine Achse 19 auf, die durch eine Durchgangsbohrung 20 des scheibenförmigen Grundelementes 8 ragt und mit dem stationären Teil 3 fest verbunden ist. Die Längsachse der Achse 19 stimmt mit der Drehachse bzw. der Längsachse 4 überein.

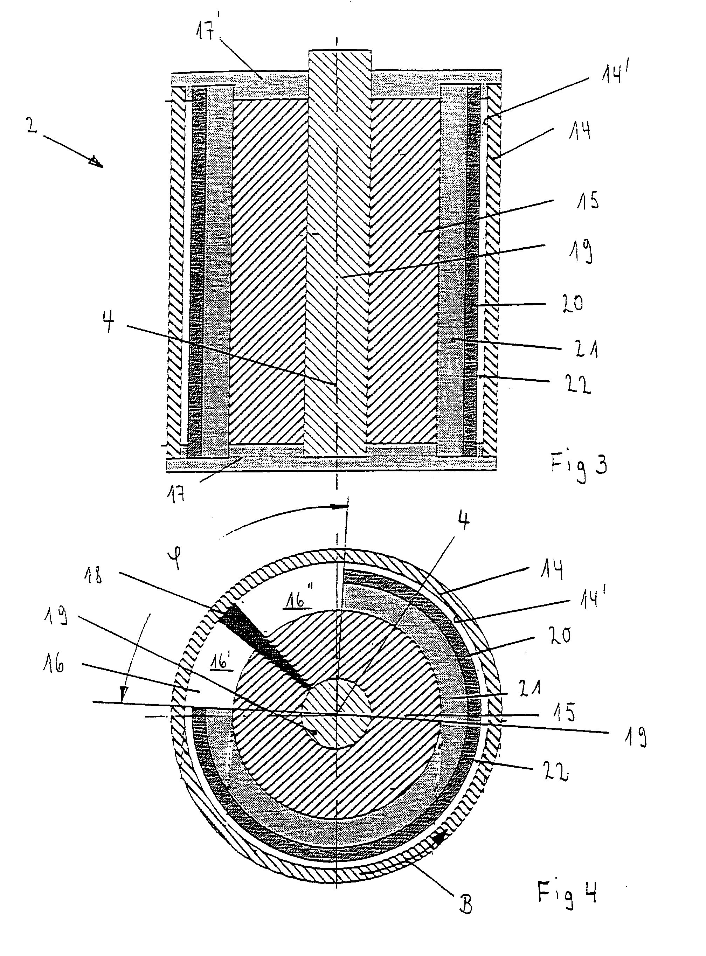

Fig. 2 zeigt das Riemenspannsystem mit Schwingungsdämpfer in Draufsicht, wobei das Deckelteil 17 des Gehäuses 14 fehlt, so daß das in dem Gehäuse gelagerte zylindrische Element 15 mit Drehkolbenflügel 18 zu sehen ist. Gleiche in Fig. 2 dargestellte Teile, die in Fig. 1 bereits beschrieben sind, sind mit gleichen Bezugszeichen versehen. Die weitere Beschreibung des Aufbaus des Torsionsschwingungsdämpfers wird anhand der detaillierteren Figuren 3 und 4, die den Torsionsschwingungsdämpfer in Längs- und Querschnitt darstellen, nachstehend erläutert.

In Fig. 3 ist im Längsschnitt das zylindrische Gehäuse 14 mit oberen und unteren Deckelteil 17,17', sowie das mittig in dem Gehäuse 14 gelagerte zylindrische Element 15 mit Achse 19 dargestellt. Das Gehäuse 14 ist wie bereits zu den Figuren 1 und 2 beschrieben auf dem scheibenförmigen Grundelement 8 angeschraubt und dreht sich bei einer Drehbewegung der Spannrollenwippe 7 um die Drehachse 4, die der Längsachse der Achse 19 entspricht, mit. Diese Drehbewegung liegt bei diesem dargestellten Ausführungsbeispiel zwischen einem Winkel 0 und ϕ, der in Fig. 4 eingezeichnet ist und in etwa zwischen 0 und 90° liegt. Dieser Winkel kann jedoch auch beliebig anders gewählt werden. Die Achse 19, die fest mit dem zylindrischen Element 15 in Verbindung steht, ist wie bereits näher zu Figuren 1 und 2 beschrieben, an dem stationären Teil 3 des Riemenspannsystems angeordnet und ist somit drehfest. In den Figuren 3 und 4 ist ersichtlich, daß zwischen der Gehäuseinnenwand 14' und dem zylindrischen Element 15 eine Hülse 20 angeordnet ist, die in dem oberen und unteren Deckelteil 17,17' gelagert ist.

Aus der Hülse 20 ist ein Segment, das dem maximalen Verdrehwinkel ϕ entspricht, ausgeschnitten. Zwischen der Hülse 20 und dem zylindrischen Element 15 ist eine Isolationsschicht 21 vorgehen. Zwischen der Hülse 20 und dem Gehäuse 14 verbleibt ein schmaler Ringspalt 22. Der Ringspalt 22 sowie die damit in Verbindung stehende Kammer 16 sind mit einer elektrorheologischen Flüssigkeit gefüllt.

Der an dem zylindrischen Element 15 angeordnete Drehkolbenflügel 18 unterteilt die Kammer 16 in eine erste und eine zweite Kammer 16',16''.

Die sphärischen Begrenzungsflächen des Ringspaltes 22, die durch die Gehäuseinnenwand 14' und die Hülse 20 gebildet werden, sind in an sich bekannter Weise als Kondensatorflächen ausgebildet. Hierzu ist die Hülse 20 mit einer regelbaren Hochspannungsquelle verbunden. Das Gehäuse ist geerdet. Dies ist in den Zeichnungen nicht dargestellt.

Dreht sich nun die Spannrollenwippe aufgrund wechselnder Riemenvorspannung, so führt das Gehäuse 14 sowie die in den Dekkelteilen 17, 17' gelagerte Hülse 20 und die Isolationsschicht 21 entsprechend der Drehbewegung der Spannrollenwippe (dargestellt durch Pfeil B) eine relative Drehbewegung gegenüber dem zylindrischen Element 15 mit daran angeordnetem Drehkolbenflügel 18 aus. Hierdurch wird von der in Drehrichtung gesehenen ersten Kammer 16'' vor dem Drehkolbenflügel 18 elektrorheologische Flüssigkeit durch den Ringspalt 22 verdrängt und strömt in die zweite Kammer 16' hinter den Drehkolbenflügel 18, deren Flüssigkeitsvolumen entsprechend zunimmt.

In Abhängigkeit von einem Hochspannungssignal ist die Viskosität der sich zwischen den Kondensatorflächen befindlichen elektrorheologischen Flüssigkeit im Ringspalt 22 veränderbar, so daß durch entsprechende Viskositätssteuerung eine auftretende gemessene Riemenschwingung gedämpft werden kann.

Als eine die Riemenschwingung repräsentierende Meßgröße kann beispielsweise die Trummkraft oder die Trummbewegung ermittelt werden. Diese ermittelte Meßgröße wird dann als Eingangssignal einer Steuereinrichtung 24 (Fig. 1) zugeführt. Ausgangssignal der Steuereinrichtung 24 ist ein Hochspannungssignal, das der ermittelten Meßgröße proportional ist.

Eine weitere nicht dargestellte Ausführungsform sieht vor, daß zwischen Hülse 20 und zylindrischem Element 15 ein weiterer Ringspalt vorgesehen wird, so daß die elektrorheologische Flüssigkeit bei einer Drehbewegung des Gehäuses durch zwei konzentrisch angeordnete Ringspalte verdrängt wird. Hierbei können die Ringspalte entweder parallel geschaltet oder in Reihe geschaltet werden.

Es ist auch möglich, die erste und zweite Kammer sowie die Ringspalte mit einer magnetorheologischen Flüssigkeit zu befüllen und im Bereich des Ringspaltes/der Ringspalte mittels geeigneter Vorrichtungen steuerbare magnetische Felder aufzubauen, die dann ebenfalls die Viskosität der magnetorheologischen Flüssigkeit verändern. Bei Befüllung mit einer Flüssigkeit, die sowohl elektrorheologische als auch magnetorheologische Eigenschaften besitzt, sind auch Kombinationen von elektrischen als auch magnetischen Feldern zur Beeinflussung der Viskosität möglich.

## Patentansprüche

1. Schwingungsdämpfer für Riemenspannsysteme, mit einem in einem Gehäuse gelagerten Kolben, der das Gehäuse in eine erste und eine zweite mit einer Hydraulikflüssigkeit gefüllten Kammer unterteilt, wobei die erste und die zweite Kammer über eine Drosselstelle miteinander in Verbindung stehen und sich bei einer Relativbewegung des Kolbens in Bezug auf das Gehäuse das Volumenverhältnis der ersten und zweiten Kammern ändert, so daß die Hydraulikflüssigkeit von einer Kammer über die Drosselstelle in die andere Kammer verdrängt wird, **dadurch gekennzeichnet, daß** die Relativbewegung eine Drehbewegung ist, wobei der Kolben als an einem zylindrischen Element (15) angeordneter Drehkolbenflügel 18 ausgebildet ist und das Gehäuse (14) und das zylindrische Element (15) eine gemeinsame Drehachse aufweisen und die Drehbewegung über einen Drehwinkel (0-ϕ) begrenzt ist und die Drosselstelle als mindestens ein Ringspalt (22) ausgebildet ist, wobei in der ersten und zweiten Kammer (16', 16") sowie in dem mindestens einen Ringspalt (22) eine elektrorheologische und/oder magnetorheologische Flüssigkeit enthalten ist und den Begrenzungsflächen (14', 20) des Ringspaltes (22) elektrisch ansteuerbare Kondensatorflächen und/oder Spulenanordnungen zugeordnet sind und die Ansteuerung in Abhängigkeit von einer die Riemenspannung repräsentierenden Meßgröße erfolgt.

2. Schwingungsdämpfer für Riemenspannsysteme nach Patentanspruch 1, **dadurch gekennzeichnet, daß** zwei Ringspalte (22) vorgesehen sind, die in Reihe geschaltet sind.

3. Schwingungsdämpfer für Riemenspannsysteme nach Patentanspruch 1, **dadurch gekennzeichnet, daß** zwei Ringspalte (22) vorgesehen sind, die parallel geschaltet sind.

## Claims

1. Vibration damper for belt tensioning systems, with a piston which is mounted in a housing and divides the housing into a first and a second chamber filled with a hydraulic fluid, wherein the first and the second chamber are connected to one another via a restrictor, and the ratio of volumes of the first and second chambers changes upon a relative movement of the piston with respect to the housing, so that the hydraulic fluid is displaced from one chamber via the restrictor into the other chamber, **characterised in that** the relative movement is a rotational movement, wherein the piston is formed as a rotary piston vane (18) arranged at a cylindrical element (15), the housing (14) and the cylindrical element (15) have a common axis of rotation, the rotational movement is limited by an angle of rotation (0 - Ø), and the restrictor is formed as at least one annular gap (22), wherein an electrorheological and/or a magnetorheological fluid is contained in the first and second chamber (16', 16") as well as in the at least one annular gap (22), electrically controllable capacitor faces and/or coil arrangements are associated with the boundary faces (14', 20) of the annular gap (22), and the control takes place in accordance with a measured quantity which represents the belt tension.

2. Vibration damper for belt tensioning systems according to Claim 1, **characterised in that** two annular gaps (22) are provided, these being disposed in series.

3. Vibration damper for belt tensioning systems according to Claim 1, **characterised in that** two annular gaps (22) are provided, these being disposed in parallel.

## Revendications

1. Amortisseur de vibrations pour systèmes de tension de courroies, comprenant un piston logé dans un boîtier, piston qui subdivise le boîtier en une première et une deuxième chambres remplies d'un liquide hydraulique, la première et la deuxième chambre étant reliées l'une à l'autre par l'intermédiaire d'une position d'étranglement, et le rapport des volumes des première et deuxième chambres se modifiant dans un mouvement relatif du piston par rapport au boîtier, de sorte que le liquide hydraulique soit déplacé depuis une chambre par l'intermédiaire de la position d'étranglement vers l'autre chambre, **caractérisé en ce que** le mouvement relatif est un mouvement de rotation, le piston étant conçu comme une aile de piston rotatif (18) disposée sur un élément cylindrique (15) et le boîtier (14) et l'élément cylindrique (15) comprenant un axe de rotation commun et le mouvement de rotation étant délimité par l'intermédiaire d'un angle de rotation (0-ϕ) et que la position d'étranglement est conçue comme au moins un espace annulaire (22), un liquide électrorhéologique et/ou magnétorhéologique étant contenu dans les première et deuxième chambres (16', 16") ainsi que dans un des espaces annulaires (22) et des surfaces de condensateur et/ou des agencements de bobines, pouvant être dirigés de manière électrique, sont associés aux superficies (14', 20) de l'espace annulaire (22) et le guidage se faisant en fonction d'une grandeur mesurée représentant la tension des courroies.

2. Amortisseur de vibrations pour systèmes de tension de courroies selon la revendication 1, **caractérisé en ce que** deux espaces annulaires (22) sont prévus, qui sont connectés en série.

3. Amortisseur de vibrations pour systèmes de tension de courroies selon la revendication 1, **caractérisé en ce que** deux espaces annulaires (22) sont prévus, qui sont connectés en parallèle.
